# EUROPEAN PATENT APPLICATION

(11) **EP 2 072 111 A2**
(43) Date of publication of application: **24.06.2009**
(21) Application number: 08171640.9
(22) Date of filing: 15.12.2008
(51) Int. Cl.: B01D 53/62, B01D 53/96

(54) **Carbon dioxide separation via partial pressure swing cyclic chemical reaction**

(30) Priority: 19.12.2007 US 959562
(71) Applicant: Air Products and Chemicals, Inc., Allentown PA 18195-1510 (US)
(72) Inventor: Hufton, Jeffrey Raymond, Fogelsville, PA 18051 (US); Quinn, Robert, Macungie, PA 18062 (US); White, Vincent, Ashtead,, Surrey KT21 1SE (GB); Allam, Rodney John, Chippenham,, Wiltshire SN14 6LY (GB)
(74) Representative: Schwabe - Sandmair - Marx

(57) **Abstract**

A method for separating a reactive gas from a feed gas mixture is disclosed. The method includes reacting the reactive gas with a bed of reactive solid in an exothermic reaction to create a second solid and a product gas from which the reactive gas is depleted. The product gas is removed and the heat from the reaction is used to liberate the reactive gas from the second solid in an endothermic reaction which yields the reactive solid. The reactive gas is removed and sequestered. Heat reservoir material is included in the bed to retain the heat in support of the endothermic reaction, A device for executing the method having an insulated chamber holding the bed, as well as process units formed of multiple beds are also disclosed. The process units allow the method to be operated cyclically, providing a continuous flow of feed gas, reactive gas and product gas.

## Description

### STATEMENT REGARDING FEDERALLY SPONSORED RESEARCH OR DEVELOPMENT

This invention was made with Government support under DOE Agreement No. DE-FC26-01 NT41145 awarded by DOE. The Government has certain rights in this invention.

### BACKGROUND OF THE INVENTION

This invention concerns a method and a device for separating reactive gases, such as carbon dioxide, from a feed gas mixture, using partial pressure swing cyclic chemical reaction techniques.

To avoid the discharge of CO₂ to the environment during power generation, it is economically advantageous to remove the carbon as CO₂ from fuels such as coal, oil, natural gas, biogas and other gaseous hydrocarbon compounds before the fuel is burned. Removal of the carbon is accomplished by first generating a so-called "syngas" from the fuel using various techniques such as steam reforming, partial oxidation and gasification as appropriate for the particular fuel. The syngas may be comprised of hydrogen, steam, CO₂ and CO as well as other minor components. Prior to carbon removal, CO is generally shifted to CO₂ using the water gas shift reaction (CO+H₂O→CO₂+H₂). This increases the hydrogen content of the syngas and makes CO₂ the major carbon species in the syngas.

Removal of CO₂ can proceed by two approaches, an ambient temperature separation process and separation process conducted at elevated temperatures. In the ambient temperature process, the syngas is cooled to approximately ambient temperature and passed to conventional CO₂ removal units. Such units can include liquid phase absorption systems as well as solid phase adsorption systems. The liquid phase absorption systems use either physical solvents (including Rectisol or Selexol) or chemical absorbents (such as various aqueous amine solutions). The adsorbents used in the solid phase adsorption systems could consist of conventional activated carbons or zeolitic materials. Hydrogen pressure swing adsorption (PSA)is an example of a solid phase adsorption system.

In the process conducted at elevated temperature, CO₂ is removed at temperatures higher than ambient, for example, between about 300 to about 700°C, by passing the syngas through beds packed with high temperature CO₂ adsorbents. For example, US Patent No. 6,322,612 describes a high temperature PSA process used to remove CO₂ from hot, wet syngas. Published U.S. Patent Application 2004-0081614 describes a Sorption Enhanced Water Gas Shift process which utilizes packed beds of high temperature adsorbent and a water gas shift catalyst to both shift CO to CO₂ and remove CO₂ from the syngas stream. Both approaches utilize PSA concepts to regenerate the adsorbent. The adsorbent is typically a promoted hydrotalcite and can be generalized as a material with a heat of CO₂ adsorption of less than 15 kcal/gmole. In contrast to the high temperature adsorbents, there are also reactive solids that react with CO₂ at high temperatures and can be used to effectively remove CO₂ from high temperature syngas streams. These materials generally exhibit heats of reaction with CO₂ that are greater than 15 kcal/gmole. Processes using these materials rely on thermal regeneration of the reactive solids, and hence are operated under thermal cycles.

The aforementioned separation techniques produce a product gas stream comprising a gaseous fuel having a high concentration of hydrogen that can be used as a product or combusted cleanly to produce heat for power, with water as the main combustion product. In addition to the product gas stream, the separation techniques yield a second gas stream having a high concentration of CO₂, which can be sequestered, for example, in geological formations such as hydrocarbon wells, saline aquifers, and unminable coal seams.

There are however, disadvantages associated with both the ambient temperature and high temperature separation processes described above. The ambient temperature processes require substantial cooling of the syngas to achieve the typical 40-70°C operating temperatures, which translates into significant heat exchange capital expenditure and unavoidable energy losses. Steam used in the process is condensed during the syngas cooling, so the steam is not available for downstream turbine flow and power generation. The cool product gas resulting from the process is not efficiently combusted in a gas turbine, so typically it is reheated to between about 300-400°C, again requiring heat exchange capital expenditure and energy losses.

The high temperature separation processes eliminate the need for cooling, and can directly yield a hot hydrogen enriched fuel stream for the gas turbine. This is particularly the case for the Sorption Enhanced Water Gas Shift process, where combined reaction and CO₂ adsorption can reduce the carbon content of the effluent stream to less than 10% of the feedstock carbon. The processes are limited, though, by the relatively low CO₂ adsorption capacities associated with the high temperature adsorbent materials. The low adsorption capacities require relatively large beds which can be expensive to construct. Alternately, use of the aforementioned reactive solids dramatically increases the CO₂ capacity of the bed, as the entire particle is now available for reaction with CO₂ rather than just the surface as in the high temperature adsorbent case. Thermal regeneration of the reactive solids is challenging, though, since they generally require temperatures in excess of 800°C. Such high regeneration temperatures entail significant energy costs, reducing the efficiency of the process. These high temperature conditions can be difficult to generate and maintain within the vessels. Vessel design/integrity is also a significant issue.

There is clearly a need for a method and an apparatus which separates CO₂ from a syngas while avoiding the disadvantageous efficiency loss associated with ambient temperature processes, the relatively high capital costs of high temperature processes based on high temperature adsorbents, and the negative impacts of excessive regeneration requirements for thermal processes based on reactive solids.

### BRIEF SUMMARY OF THE INVENTION

The invention concerns a method of separating a reactive gas component from a feed gas mixture to yield a product gas depleted of the reactive gas component. The method comprises:
(a) providing a bed of a reactive solid;
(b) reacting the feed gas mixture with the reactive solid at a first temperature and a first reactive gas component partial pressure, the reactive gas component being combined in an exothermic chemical reaction with the reactive solid thereby forming a second solid compound and yielding the product gas;
(c) retaining heat from the exothermic chemical reaction in the bed;
(d) conducting the product gas away from the bed;
(e) reducing the reactive gas component partial pressure to a second reactive gas component partial pressure lower than the first partial pressure, thereby reversing said exothermic chemical reaction to produce said reactive gas component and said reactive solid in an endothermic reaction;
(f) using the heat to support the endothermic reaction;
(g) conducting the reactive gas component away from the bed;
(h) repressurizing the bed with a repressurization gas; and repeating steps (a) through (h).

It is advantageous that at least 15 kcal/gmole of the reactive gas component be released during the reacting of the feed gas mixture with the reactive solid in the exothermic chemical reaction.

The step of reducing the reactive gas component partial pressure may be effected by reducing the pressure within the bed and purging the bed with a purge gas, or by simply purging the bed with a purge gas. The purge gas is preferably steam and is a countercurrent flow to the feed gas mixture.

The method may further comprise periodically regenerating the reactive solid by passing a regenerating gas, heated to a third temperature, through the bed, thereby reversing the exothermic chemical reaction to produce the reactive gas component and the reactive solid in the endothermic reaction.

To advantageously retain heat in the bed the bed may include, with the reactive solid, a heat reservoir material. The heat reservoir material may include a phase change material which changes phase at a temperature less than or equal to the first temperature. Alternately and/or in addition, the bed may include heat reservoir material that has a heat capacity and a thermal conductivity greater than or equal to the heat capacity and thermal conductivity of the reactive solid.

In a particular example, the method concerns separating carbon dioxide from a feed gas mixture including the carbon dioxide and hydrogen, to yield a product gas depleted of the carbon dioxide. The method comprises:
(a) providing a bed of a reactive solid;
(b) reacting the feed gas mixture with the reactive solid at a first temperature and first carbon dioxide partial pressure, the carbon dioxide being combined in an exothermic chemical reaction with the reactive solid thereby forming a solid carbonate compound and yielding the product gas;
(c) retaining heat from the exothermic chemical reaction in the bed;
(d) conducting the product gas away from the bed;
(e) reducing the carbon dioxide partial pressure to a second carbon dioxide partial pressure lower than the first carbon dioxide partial pressure thereby reversing the exothermic chemical reaction to produce carbon dioxide and the reactive solid in an endothermic reaction;
(f) using the heat to support the endothermic reaction;
(g) conducting the carbon dioxide away from the bed;
(h) repressurizing the bed with a repressurization gas; and repeating steps (a) through (h).

The step of reducing the reactive gas component partial pressure may be effected by reducing the pressure within the bed and purging the bed with a purge gas, or by simply purging the bed with a purge gas. The purge gas is preferably steam and is a countercurrent flow to the feed gas mixture.

The invention also includes a bed for separating a reactive gas component from a feed gas mixture at a first temperature. The bed comprises a reactive solid material and a heat reservoir material mixed with the reactive solid material. The heat reservoir material may comprise particles having a heat capacity and a thermal conductivity greater than or equal to the heat capacity and thermal conductivity of the reactive solid material. Alternately and/or in addition, the heat reservoir material may comprise a phase change material which undergoes a phase change at a temperature less than or equal to the first temperature.

The invention further encompasses a device for separating a reactive gas component from a feed gas mixture at a first temperature to yield a product gas depleted of the reactive gas component. The device comprises an insulated chamber, and a bed comprising a reactive solid and a heat reservoir material. The reactive solid is capable of reacting with the reactive gas component in an exothermic reaction. A first conduit provides fluid communication with the chamber for conducting the feed gas mixture to the bed, and a second conduit is also in fluid communication with the chamber for conducting the product gas away from the bed.

### BRIEF DESCRIPTION OF SEVERAL VIEWS OF THE DRAWINGS

Figure 1 is a flow chart illustrating an embodiment of a method of separating an adsorbable gas using pressure swing reaction techniques according to the invention;

Figure 2 is a schematic diagram of a device for separating an adsorbable gas using pressure swing reaction techniques according to the invention;

Figure 3 is a schematic diagram of a process unit comprised of multiple devices shown in Figure 2; and

Figure 4 is a schematic diagram illustrating multiple process units arranged in parallel.

### DETAILED DESCRIPTION OF THE INVENTION

The method of separating CO₂ from a syngas according to the invention uses a bed of high temperature reactive solids, defined herein as solids that can react with CO₂ in the temperature range of 400°C - 800°C with a heat of reaction greater than 15 kcal/gmole of CO₂. By bed is meant a grouping of solid matter which provides a surface area which can contact a gas or other fluid to facilitate a chemical or physical reaction between the solid matter and the gas. Known approaches for using these types of materials utilize thermal regeneration at temperatures of 800°C and above. The method according to the invention utilizes these materials in a process cycle which includes a regeneration step where the partial pressure of CO₂ in the bed is reduced to a level below the feed gas mixture. This can be accomplished by either reducing the total gas pressure or reducing the CO₂ concentration. Another key aspect of the invention relates to heat retention in the bed - the heat of reaction must be contained in the bed to provide the energy needed for regeneration of the reactive solid. Embodiments with beds packed with high heat capacity materials, and/or phase change materials, are considered part of this invention.

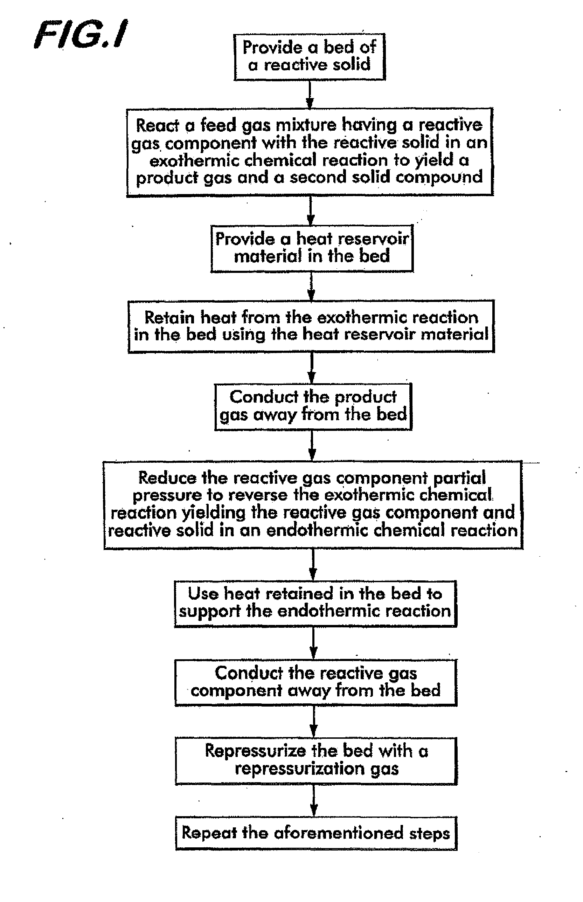

Figure 1 shows a flow diagram of an embodiment of the method. A feed gas mixture, for example a syngas containing hydrogen and CO₂, is reacted with the reactive solid at an elevated temperature of between about 500°C and about 700°C wherein the CO₂ reacts with the reactive solid to form a second solid compound, in this example containing a bulk metal carbonate phase. The preferred reactive solid reacts exothermically with the CO₂ and releases significant energy in the form of heat that is retained in the packed bed containing both the reactive solid and the second solid compound. It is advantageous that the reactive solid be selected such that the reaction releases at least 15 kcal/gmole of reacted CO₂.

Reaction of CO₂ with the reactive solid effectively removes it from the gas phase, yielding a product gas with an increased concentration of hydrogen that is conducted away from the reactive solid. Once the majority of reactive solid in the bed is converted to the second solid compound, the capability for removing CO₂ from the gas diminishes and the bed is regenerated by reducing the partial pressure of CO₂. In the current embodiment, the reactive solid is depressurized to a lower pressure, for example, between about 5 bar and about 0.3 bar, followed by a purge of the bed using a purge gas stream, preferably steam, also at a low pressure (between about 5 bar and about 0.3 bar). These steps are preferably conducted counter-currently (where counter-currently means gas flow is in the opposite direction of the feed gas flow). These regeneration steps liberate CO₂ from the second solid compound in an endothermic reaction by reversing the CO₂-carbonate reaction of the reaction step. The heat generated previously during the exothermic reaction of CO₂ with the reactive solid is retained in the bed of reactive solid/second solid compound, and is used to support the endothermic reaction. The gas exiting the bed during the depressurization and purge steps, containing the liberated CO₂ gas, is conducted away from the bed and recovered as a relatively high purity CO₂ by-product stream. The bed of regenerated reactive solid is next repressurized with steam, a mixture of steam and hydrogen gas, additional syngas, or product gas. The aforementioned steps are repeated cyclically.

Multiple beds are utilized in the process, with each bed operating under the above sequence of steps so that at least one bed is undergoing the reaction step and one is undergoing regeneration. In this way continuous feed gas mixture and product gas flow rates can be realized.

In an alternate embodiment, a high pressure steam rinse may be conducted after the reaction step and before the depressurization step. The rinse can be conducted either cocurrently or countercurrently. The high pressure steam rinse can effectively displace void gas from the packed bed, thereby producing an effluent gas at the pressure of the feed gas mixture that can be either taken as slightly impure product or recycled to another bed as a feed gas mixture for further separation of the reactive gas component.

It is also possible to use steam purge at feed gas mixture pressure as the mechanism to reduce the CO₂ partial pressure in the bed and provide a driver for CO₂ liberation. This step would be operated in countercurrent direction. Relatively high amounts of steam purge would be required compared to low pressure regeneration, but the effluent gas could be directed to a steam turbine system for power generation and CO₂ recovery at approximately one bar. Alternatively, the steam could be condensed in a heat recovery system to yield the by-product CO₂ at essentially feed gas mixture pressure.

As noted above, the exothermic CO₂ reaction with the reactive solid liberates heat which is later used to support the endothermic reaction during regeneration steps. To facilitate this aspect of the method, reactive solids are selected which react exothermically with the gas with which they are reacting. For removing CO₂ from a syngas, reactive solids consisting of complex metal oxides containing two or more different metallic elements can be used. There are numerous possible materials, such as lithium orthosilicate, lithium zirconate, sodium zirconate, lithium ferrite, sodium aluminate, calcium aluminate, barium aluminate, sodium ferrate, calcium silicate, and combinations thereof. CO₂ reaction heats for some of these materials are listed in Table 1.

**Table 1. Reaction Heats for CO₂ Carbonation.**

| T (C) | Li4SiO4 -ΔH, kcal/gmole CO₂ | Li2ZrO3 -ΔH, kcal/gmole CO₂ | Li2Fe2O4 -ΔH, kcal/gmole CO₂ | Na2ZrO3 -ΔH, kcal/gmole CO₂ |
|---|---|---|---|---|
| 500 | 28.5 | 36.1 | 24.2 | 33.3 |
| 700 | 25.1 | 34.3 | 22.5 | 32.4 |

It is preferred that the process operate so the heat generated from the exothermic reaction of CO₂ with the reactive solid is kept within the packed bed. The subsequent regeneration is then preferably conducted countercurrent to the reaction step, so the heat can travel back through the bed of second solid compound and thereby provide the energy needed for the reverse, endothermic reaction. If this energy is not used in this manner, then heat must be externally provided to the bed, either through the vessel walls, via internal heat exchange systems, or by preheating the purge gas. Effective use of the heat from the exothermic reaction yields dramatic energy savings, reducing the cost and increasing the efficiency of the method as compared with the use of the steam purge as the sole heat carrier in support of the endothermic regeneration reaction.

To help retain the heat within the packed bed, it is advantageous to add material which acts as a heat reservoir to store the heat from the exothermic reaction, and later give up the heat to support the endothermic reaction during regeneration. The addition of such materials facilitates more isothermal operation of the reactive solid and reduces the amount of steam required in the steam purge steps of the method.

To this end it is advantageous to include in the bed, with the reactive solid, a phase change material which changes phase within the operating temperature range of interest for the method. For processes wherein CO₂ is the reactive gas component, this temperature range is between about 400°C and about 800°C. Salts or mixtures of salts such as eutectic salt mixtures, which melt at a temperature in the range compatible with the CO₂ reaction are feasible. For the CO₂ example the following eutectic salt mixtures are feasible:
(1) 49.5% Li₂CO₃ + 44.5% Na₂CO₃ + 6% K₂CO₃ which melts at 468°C;
(2) 58% Na₂CO₃ + 3% K₂CO₃ + 39% Rb₂CO₃ which melts at 558°C;
(3) 14% CaSO₄ + 6% BaSO₄ + 80% Li₂SO₄ which melts at 660°C.

Pure salts are also known that melt within the temperature range of interest, such as:
1. lithium iodide which melts at 449°C;
2. lithium chloride which melts at 605°C;
3. sodium iodide which melts at 661°C;
4. potassium iodide which melts at 681 °C;
5. lithium carbonate which melts at 723°C;
6. potassium chloride which melts at 770°C.

The quantity of the salt or salt mixtures required is proportional to the amount of reactive solid and the heat liberated in the exothermic reaction. When salt or salt mixtures are used, the low pressure steam purge acts as a heat transfer fluid and a sweep gas to remove the CO₂ gas. In practical applications the salts may be encapsulated within particles comprising a sealed metallic or alumina layer. The particles may also be coated with the reactive solid.

In an alternate embodiment, it is advantageous to pack a high temperature, high density, high heat capacity, high thermal conductivity material (such as quartz, alumina, or metallic particles) in the bed along with the reactive solid. The particles act as a heat reservoir, storing the heat from the exothermic reaction and releasing the heat to support the endothermic regeneration of the solid compound which liberates the CO₂ gas. Preferably this heat reservoir material has a heat capacity and a thermal conductivity greater than or equal to the heat capacity and thermal conductivity of the reactive solid material

If the syngas also contains CO, it is advantageous to inject steam with the syngas and include a high temperature shift catalyst in the bed with the reactive solid. The high temperature shift catalyst will catalyze the water gas shift reaction (CO+H₂O→CO₂+H₂) and permit the CO to react with the steam to form CO₂ and hydrogen. The CO₂ thus formed will be adsorbed and removed from the syngas, more hydrogen will be produced and the shift reaction will be pushed further to completion. Shift catalysts such as chromium/iron oxide, copper/chromium/iron oxide as well as cobalt based catalysts are feasible. Other materials generally classified as non-catalytic may also catalyze the reaction under the conditions of temperature and pressure associated with the method. Such materials include alumina, dolomite, limestone and marble chips. The addition of the catalyst may have the added benefit of permitting operation with lower temperature feed gas mixture since the water gas shift reaction is an exothermic reaction and will add still more energy to the bed of reactive solid during the reaction step. This energy can then be used in the regeneration of the second solid compound.

Because some heat is lost in each cycle of the method there may not be enough energy to completely regenerate the second solid compound, and some residual CO₂ will remain in the bed as carbonate after each cycle. The carbonate will accumulate, resulting in a shorter breakthrough time with each cycle until the effective CO₂ working capacity of the bed declines to a threshold value where it will need to be thermally regenerated. This is accomplished by heating the bed with hot gas to a temperature of about 700°C, followed by cooling with a gas such as pure nitrogen that does not contain CO₂. The high temperature exposure favors the endothermic reaction of the solid compound to reactive solid and CO₂, thereby transforming the solid compound to reactive solid. It is thought that more than 100 pressure swing reaction cycles can be completed by the method according to the invention before it becomes necessary to thermally regenerate each bed.

The hot gas from above can consist of diluted combustion flue gas, where dilution is with nitrogen, hydrogen or steam. It could also be a CO₂-containing recycled gas, where addition of combustion flue gas or external heat transfer is used to reheat the gas before it enters the bed. A small slip stream of the recycled gas would be continuously removed. Hot steam, nitrogen, or hydrogen can be used to heat the beds, where the hot gas is generated by indirect heating against combustion flue gas in a heat exchanger. A recuperative heat exchanger system could also be used where hot combustion gas is first used to preheat a packed bed, followed by the flow of steam, nitrogen, or hydrogen. The latter is heated by the thermal capacity of the packed bed to the desired temperature range.

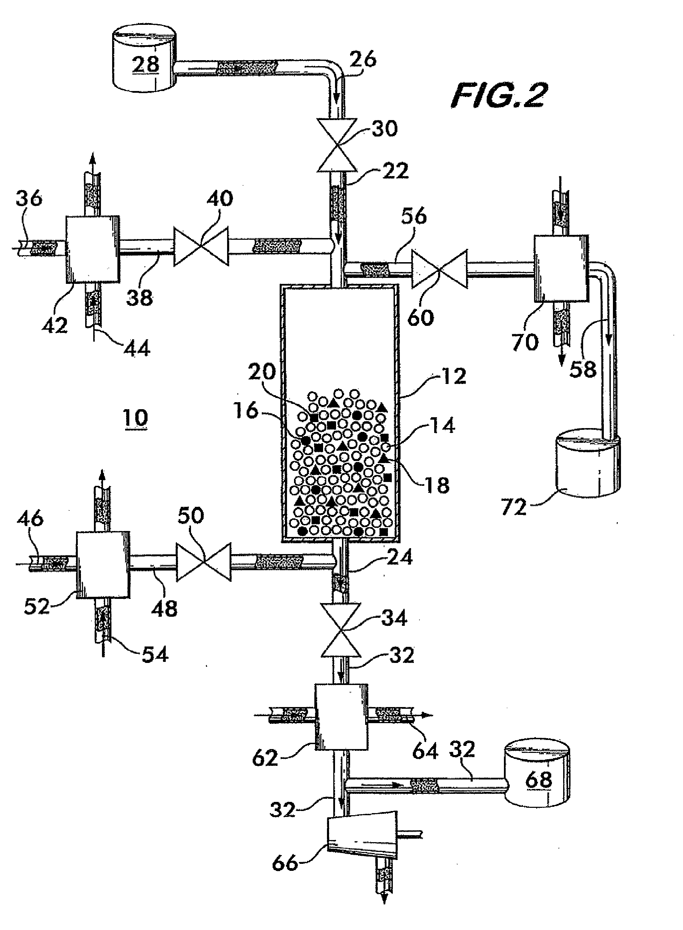

Figure 2 shows a device 10 for separating CO₂ by the method according to the invention. Device 10 comprises a chamber 12 which contains the bed of reactive solid 14 as well as the heat reservoir material, which may comprise the eutectic salts 16 and/or the high temperature, high density, high heat capacity, high thermal conductivity particles 18. In addition or alternately, the chamber 12 may also contain a water gas shift catalyst 20. Chamber 12 is preferably insulated to prevent heat loss from the packed bed to the ambient. An internally positioned refractory material is used for insulation due to the high temperatures at which the device operates. Conduits 22 and 24 provide fluid communication to the chamber to permit the various gases to enter and exit as described below.

Flow of feed gas mixture, for example a syngas 26 to the chamber 12 through conduit 22 is controlled by valve 30. Similarly, flow of the product gas out from the chamber through conduit 24, in this example hydrogen 32, is controlled by valve 34. Flow of high pressure steam 36 to the chamber through a conduit 38 is controlled by valve 40. The high pressure steam may be generated in a heat exchanger 42 using flue gas 44. Similarly, flow of low pressure steam 46 to the chamber through conduit 48 is controlled by valve 50. Again, the steam may be generated by a heat exchanger 52 using flue gases 54. Flow of effluent gas through conduit 56, in this example, the CO₂ 58, separated from the syngas and liberated from the second solid compound during regeneration, is controlled by valve 60.

In operation of device 10, the syngas 26 is provided from a source 28 at the desired reaction temperature and pressure of between about 500°C to about 700°C and between about 20 bar to about 40 bar respectively. The source 28 could be, for example, the output of a steam reforming process, a partial oxidation process as well as a gasification process using suitable fossil or biomass fuels.

Valve 30 is opened to allow syngas 26 to pass through conduit 22 and enter chamber 12 where it is reacted with the reactive solid 14. CO₂ in the syngas is effectively removed by the reactive solid by reacting to form the second solid compound. Heat is released from the exothermic reaction which is stored in the heat reservoir particles 16 and 18 as well as the second solid compound. CO in the syngas reacts with the shift catalyst 20 producing CO₂ and hydrogen according to the water gas shift reaction. The additional CO₂ is reacted with the reactive solid, releasing additional heat, which is stored in the heat reservoir particles and the second solid compound. With the CO₂ removed the syngas 26 is converted to the product gas 32, comprising in this example a gas stream having a high concentration of hydrogen and a low concentration of carbon species (CO + CO₂). Valve 34 is opened to permit flow of the product gas through conduit 24. A heat exchanger 62 may be used to cool the product gas 32 by generating steam 64. If fed to a turbine 66 for power generation, the product gas is only minimally cooled to render it acceptable for combustion in the gas fired turbine. It is here that efficiencies of the method according to the invention are realized, as high temperature high pressure hydrogen gas is supplied to the turbine. Alternately, the hydrogen product gas 32 could be cooled to ambient and stored in a reservoir 68.

If desired, high pressure steam 36 may be used to remove void gases from the chamber in a high pressure steam rinse. The steam may be generated in heat exchanger 42 using flue gases 44 and conducted to the chamber through conduit 38, the flow controlled by valve 40. The effluent gas from this step can pass through conduit 24 as above.

Once the reactive solid has reacted to the second solid compound, valves 30 and 34 controlling the flow of syngas 26 and product gas 32 are closed and the regeneration of the bed is effected by 1) opening valve 60 to depressurize chamber 12 to a predetermined pressure, and 2) opening valve 50 to begin purging the bed with low pressure steam 46 from heat exchanger 52. Carbonate incorporated in the second solid compound is converted back into CO₂ and reactive solid in an endothermic reaction. Heat is supplied in support of the reaction from the heat reservoir particles 16 and 18 and the heat capacity of the second solid compound, and the effluent gas comprised of the low pressure steam 46 and CO₂ 58 exits the chamber through conduit 56. The effluent is cooled in heat exchanger 70 to separate the steam from the CO₂, and the CO₂ may then be transported for sequestration, for example, in a geological formation 72.

After the regeneration steps, the bed 14 is pressurized to reaction step pressure by closing valve 50 and valve 60 and opening valve 30 so syngas flows through conduit 22 to the bed. Alternatively, the bed can be pressurized with steam by closing valve 50 and valve 60 and opening valve 40 so steam passes through conduit 38 to the bed, or opening valve 50 so steam passes through conduit 48 to the bed. It is also possible to pressurize the bed with some of the hydrogen product gas by closing valve 50 and valve 60 and opening valve 34 so hydrogen passes through conduit 24 to the bed.

After pressurization, all the valves are closed and valves 30 and 34 are opened to start the cycle again.

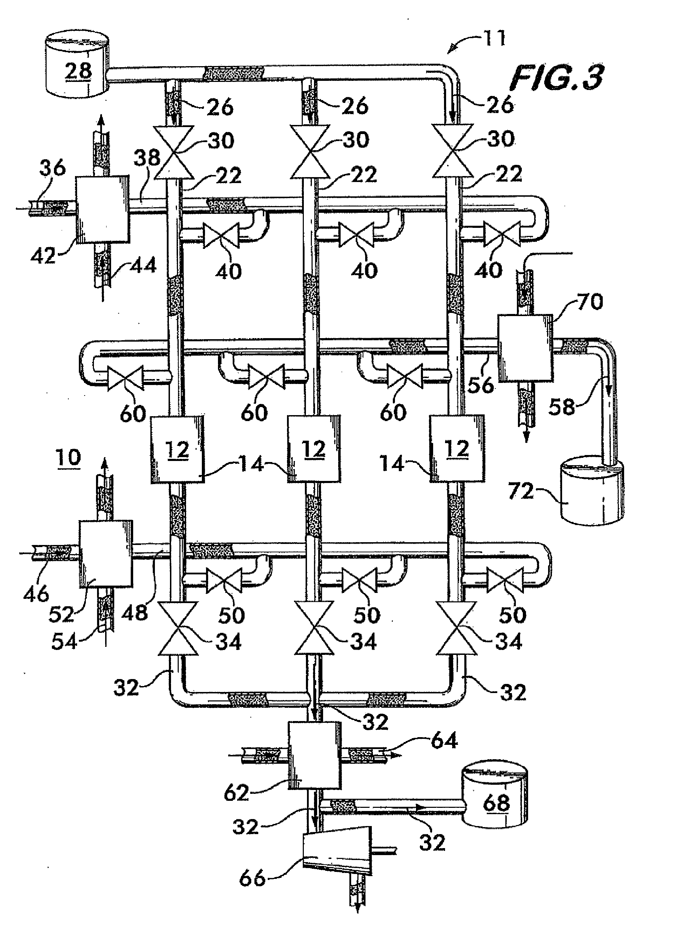

As shown in Figure 3, the complete process unit 11 consists of multiple devices 10 operated together in parallel. Each bed 14 operates under the above sequence of steps. Multiple beds are utilized in the process, and the opening and closing of the various valves are coordinated so that at least one bed is undergoing the reaction step and one is undergoing regeneration. In this way continuous feed gas mixture and product gas flow rates can be realized. The multiple beds can share common equipment such as heat exchangers 44, 54, 62, 70, tanks 28, 72, 68, and gas turbine 66.

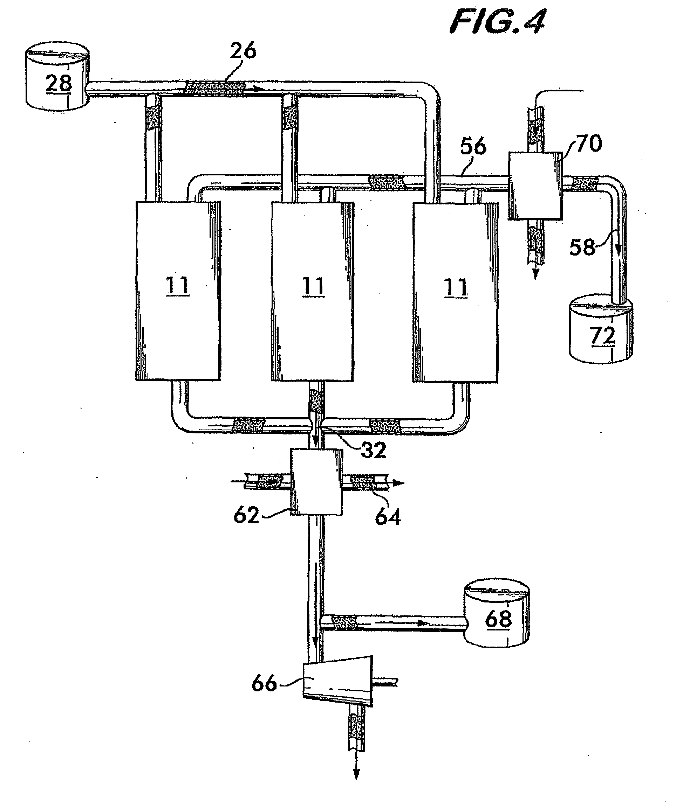

During each cycle some heat is lost, either through heat transfer from the chamber 12 to the ambient or in the gas streams which enter and leave the chamber. As a result, residual carbonate builds up on the reactive solid and must be removed periodically by a regeneration step. To afford a seemingly continuous operation, process units 11 are operated in parallel as shown in Figure 4. This enables a single process unit 11 to be taken off line while the others continue in operation. The beds comprising the off-line unit 11 are heated to 700°C or higher and purged with low pressure steam to remove the residual carbonate, and then cooled to the normal reaction step temperature. The regenerated process unit may be then brought back on line and another process unit may be taken offline for regeneration.

As an alternative, the thermal regeneration of the beds can be conducted at a temperature above 700°C, preferably by passing combustion flue gas through the chambers followed by cooling of the reactive solid with a gas such as nitrogen or steam which does not contain CO₂.

### Computer Simulation Results

SIMPAC software was used to model the CO₂-lithium orthosilicate reaction in fixed beds. The model considered the reaction thermodynamics of the system and evolution of heat during the reaction process. The cyclic operation of the method according to the invention was simulated with feed gas mixture having 16% CO₂ in N₂ at 27.2 atm. The process cycle operated with three beds and included feed, co-current steam rinse, counter-current depressurization, counter-current steam purge and counter-current steam repressurization. The total steam used for purge was fixed, and the feed gas mixture flow rate was automatically controlled to yield a desired product N₂ purity of 97.0% or 98.5%. The process valves were adjusted to yield appropriate depressurization and repressurization rates. Table 2 summarizes the results of the simulation.

**Table 2 SIMPAC Simulation for CO₂-Lithium Orthosilicate**

| Feed and Purge Temp (°C) | Product Purity (%mole N₂) | CO₂ Rejection (%) | Avg CO₂ Purity in Effluent Gas (%) | Steam Ratio (lbmole steam/lbmole feed gas) | Bed Size (lb ads/lbmole feed gas) | N2 Recovery |
|---|---|---|---|---|---|---|
| 550 | 97.0 | 82.7 | 7.47 | 1.69 | 174.7 | 96.5 |
| 550 | 98.5 | 91.5 | 7.97 | 1.74 | 180.1 | 96.5 |
| 650 | 97.0 | 83.4 | 19.95 | 0.55 | 57.5 | 99.3 |
| 650 | 98.5 | 91.8 | 21.37 | 0.56 | 58 | 99.3 |

The simulation predicts effective operation of a partial pressure swing cyclic chemical reactor according to the invention at temperatures much lower than those generally needed for thermal regeneration processes utilizing these reactive solids. Performance improves with higher feed and purge temperatures, where recovery is better than 99% with decreasing steam rate and reactive solid bed size.

The invention further relates to the following Items
1. A method of separating a reactive gas component from a feed gas mixture to yield a product gas depleted of said reactive gas component, said method comprising:
   (a) providing a bed comprising a reactive solid;
   (b) reacting said feed gas mixture with said reactive solid at a first temperature and a first reactive gas component partial pressure, said reactive gas component being combined in an exothermic chemical reaction with said reactive solid thereby forming a second solid compound and yielding said product gas;
   (c) retaining heat from said exothermic chemical reaction in said bed;
   (d) conducting said product gas away from said bed;
   (e) reducing the reactive gas component partial pressure to a second reactive gas component partial pressure lower than said first partial pressure thereby reversing said exothermic chemical reaction to produce said reactive gas component and said reactive solid in an endothermic reaction;
   (f) using said heat to support said endothermic reaction;
   (g) conducting said reactive gas component away from said bed;
   (h) repressurizing said bed with a repressurization gas; and repeating steps (a) through (h).
2. A method according to Item 1, further comprising releasing at least 15 kcal/gmole of said reactive gas component during said reacting of said feed gas mixture with said reactive solid in said exothermic chemical reaction.
3. A method according to Item 1, wherein reducing the reactive gas component partial pressure is effected by reducing the pressure within said bed and purging said bed with a purge gas.
4. A method according to Item 3, wherein said purge gas passes countercurrently to said feed gas mixture through said bed.
5. A method according to Item 1, wherein reducing the reactive gas component partial pressure is effected by purging said bed with a purge gas.
6. A method according to Item 5, wherein said purge gas passes countercurrently to said feed gas mixture through said bed.
7. A method according to Item 1, further comprising periodically regenerating said reactive solid, said regenerating comprising:
   passing a regenerating gas, heated to a third temperature, through said bed thereby reversing said exothermic chemical reaction to produce said reactive gas component and said reactive solid in said endothermic reaction.
8. A method according to Item 1, wherein retaining heat in said bed comprises including, with said reactive solid, a heat reservoir material.
9. A method according to Item 8, wherein said heat reservoir material includes a phase change material which changes phase at a temperature between about 400°C and about 800°C.
10. A method according to Item 8, wherein said heat reservoir material has a heat capacity and a thermal conductivity greater than or equal to the heat capacity and thermal conductivity of said reactive solid.
11. A method of separating carbon dioxide from a feed gas mixture including said carbon dioxide and hydrogen, to yield a product gas depleted of said carbon dioxide, said method comprising:
   (a) providing a bed comprising a reactive solid;
   (b) reacting said feed gas mixture with said reactive solid at a first temperature and first carbon dioxide partial pressure, said carbon dioxide being combined in an exothermic chemical reaction with said reactive solid thereby forming a solid carbonate compound and yielding said product gas;
   (c) retaining heat from said exothermic chemical reaction in said bed;
   (d) conducting said product gas away from said bed;
   (e) reducing the carbon dioxide partial pressure to a second carbon dioxide partial pressure lower than said first carbon dioxide partial pressure thereby reversing said exothermic chemical reaction to produce said carbon dioxide and said reactive solid in an endothermic reaction;
   (f) using said heat to support said endothermic reaction;
   (g) conducting said carbon dioxide away from said bed;
   (h) repressurizing said bed with a repressurization gas; and
      repeating steps (a) through (h).
12. A method according to Item 11, wherein reducing said carbon dioxide partial pressure is effected by depressurizing said bed and countercurrently purging said bed with steam.
13. A method according to Item 11, wherein reducing said carbon dioxide partial pressure is effected by countercurrently purging said bed with steam.
14. A method according to Item 11, wherein said repressurization gas is selected from the group consisting of said feed gas mixture, hydrogen, steam, said product gas, and combinations thereof.
15. A method according to Item 11, wherein said first carbon dioxide partial pressure is between about 5 bar and about 40 bar.
16. A method according to Item 11, wherein said second carbon dioxide partial pressure is between about 0.3 bar and about 5 bar.
17. A method according to Item 11, wherein said first temperature is between about 500 °C and about 700 °C.
18. A method according to Item 11, wherein said reactive solid is selected from the group consisting of lithium orthosilicate, lithium zirconate, sodium zirconate, lithium ferrite, sodium aluminate, calcium aluminate, barium aluminate, sodium ferrate, calcium silicate, and combinations thereof.
19. A method according to Item 11, wherein said feed gas mixture includes carbon monoxide, said method further comprising:
   providing a shift catalyst within said bed;
   reacting said carbon monoxide with steam using said shift catalyst to produce additional hydrogen and carbon dioxide, said additional carbon dioxide being combined in an exothermic chemical reaction with said reactive solid to form said solid carbonate compound.
20. A method according to Item 19, wherein said shift catalyst is selected from the group consisting of chromium/iron oxide, copper/chromium/iron, cobalt based catalysts, alumina, dolomite, limestone, marble chips and combinations thereof.
21. A method according to Item 11, further comprising periodically regenerating said reactive solid, said regenerating comprising:
   passing a regenerating gas, heated to a third temperature, through said bed thereby reversing said exothermic chemical reaction to produce carbon dioxide and said reactive solid in said endothermic reaction.
22. A method according to Item 21, wherein said third temperature is greater than or equal to about 700°C.
23. A method according to Item 11 wherein retaining heat in said bed comprises including, with said reactive solid, a heat reservoir material.
24. A method according to Item 23, wherein said heat reservoir material includes a phase change material which changes phase at a temperature between about 400°C and about 800°C.
25. A method according to Item 24, wherein said phase change material comprises salts selected from the group consisting of Li₂CO₃, Na₂CO₃, K₂CO₃, Rb₂CO₃, CaSO₄, BaSO₄, LiSO₄, Lil, LiCl, Nal, Kl, and combinations thereof.
26. A method according to Item 25, wherein said heat reservoir material has a heat capacity and a thermal conductivity greater than or equal to the heat capacity and thermal conductivity of said reactive solid.
27. A method according to Item 26, wherein said heat reservoir material is selected from the group consisting of quartz, alumina, metallic compounds, and combinations thereof.
28. A bed for separating a reactive gas component from a feed gas mixture at a first temperature, said bed comprising:
   a reactive solid material; and
   a heat reservoir material mixed with said reactive solid material.
29. A bed according to Item 28, wherein said reactive solid material has a heat of reaction of at least 15 kcal/gmole of said reactive gas component.
30. A bed according to Item 28, wherein said reactive solid material comprises particles selected from the group consisting of lithium orthosilicate, lithium zirconate, sodium zirconate, lithium ferrite, sodium aluminate, calcium aluminate, barium aluminate, sodium ferrate, calcium silicate, and combinations thereof.
31. A bed according to Item 28, wherein said heat reservoir material comprises particles having a heat capacity and a thermal conductivity greater than or equal to the heat capacity and thermal conductivity of said reactive solid material.
32. A bed according to Item 28, wherein said heat reservoir material comprises particles selected from the group consisting of quartz, alumina, metallic compounds, and combinations thereof.
33. A bed according to Item 28, wherein said heat reservoir material comprises a phase change material which changes phase at a temperature between about 400°C and about 800°C.
34. A bed according to Item 33, wherein said phase change material comprises salts selected from the group consisting of Li₂CO₃, Na₂CO₃, K₂CO₃, Rb₂CO₃, CaSO₄, BaSO₄, LiSO₄, Lil, LiCl, Nal, Kl, and combinations thereof.
35. A bed according to Item 33, wherein said phase change material is encapsulated within a multiplicity of particles.
36. A bed according to Item 35, wherein said phase change material is encapsulated within particles selected from the group consisting of metallic particles, alumina particles and combinations thereof.
37. A bed according to Item 36, wherein said particles are coated with said reactive solid material.

## Claims

1. A method of separating a reactive gas component from a feed gas mixture to yield a product gas depleted of said reactive gas component, said method comprising:
(a) providing a bed comprising a reactive solid;
(b) reacting said feed gas mixture with said reactive solid at a first temperature and a first reactive gas component partial pressure, said reactive gas component being combined in an exothermic chemical reaction with said reactive solid thereby forming a second solid compound and yielding said product gas;
(c) retaining heat from said exothermic chemical reaction in said bed;
(d) conducting said product gas away from said bed;
(e) reducing the reactive gas component partial pressure to a second reactive gas component partial pressure lower than said first partial pressure thereby reversing said exothermic chemical reaction to produce said reactive gas component and said reactive solid in an endothermic reaction;
(f) using said heat to support said endothermic reaction;
(g) conducting said reactive gas component away from said bed;
(h) repressurizing said bed with a repressurization gas; and
repeating steps (a) through (h).

2. A bed for separating a reactive gas component from a feed gas mixture at a first temperature, said bed comprising:
a reactive solid material; and a heat reservoir material mixed with said reactive solid material.

3. A method according to Claim 1, wherein the reactive gas component is carbon dioxide, the feed gas mixture includes carbon dioxide and hydrogen and the second solid compound is a carbonate compound.

4. A method or a bed according to any of Claims 1 to 3, further comprising releasing at least 15 kcal/gmole of said reactive gas component during said reacting of said feed gas mixture with said reactive solid in said exothermic chemical reaction.

5. A method according to any of Claims 1 and 3 to 4, wherein reducing the reactive gas component partial pressure is effected by reducing the pressure within said bed and purging said bed with a purge gas.

6. A method according to Claim 5, wherein said purge gas passes countercurrently to said feed gas mixture through said bed.

7. A method according to any of Claims 1 and 3 to 6, wherein reducing the reactive gas component partial pressure is effected by purging said bed with a purge gas.

8. A method according to any of Claims 1 and 3 to 7, further comprising periodically regenerating said reactive solid, said regenerating comprising:
passing a regenerating gas, heated to a third temperature, through said bed thereby reversing said exothermic chemical reaction to produce said reactive gas component and said reactive solid in said endothermic reaction.

9. A method according to any of Claims 1 and 3 to 8, wherein retaining heat in said bed comprises including, with said reactive solid, a heat reservoir material.

10. A method according to Claim 9, wherein said heat reservoir material includes a phase change material which changes phase at a temperature between about 400°C and about 800°C.

11. A method according to any of Claims 9 to 10, wherein said heat reservoir material has a heat capacity and a thermal conductivity greater than or equal to the heat capacity and thermal conductivity of said reactive solid.

12. A method according to any of Claims 1 and 3 to 11, wherein said phase change material comprises salts selected from the group consisting of Li₂CO₃, Na₂CO₃, K₂CO₃, Rb₂CO₃, CaSO₄, BaSO₄, LiSO₄, Lil, LiCl, Nal, Kl, and combinations thereof.

13. A method according to any of Claims 1 and 3 to 12, wherein said heat reservoir material is selected from the group consisting of quartz, alumina, metallic compounds, and combinations thereof.

14. A method according to any of Claims 1 and 3 to 13, wherein said repressurization gas is selected from the group consisting of said feed gas mixture, hydrogen, steam, said product gas, and combinations thereof.

15. A method according to any of Claims 3 to 14, wherein said first carbon dioxide partial pressure is between about 5 bar and about 40 bar.

16. A method according to any of Claims 3 to 15, wherein said second carbon dioxide partial pressure is between about 0.3 bar and about 5 bar.

17. A method or a bed according to any of Claims 1 to 16, wherein said first temperature is between about 500 °C and about 700 °C.

18. A method or a bed according to any of Claims 1 to 11, wherein said reactive solid is selected from the group consisting of lithium orthosilicate, lithium zirconate, sodium zirconate, lithium ferrite, sodium aluminate, calcium aluminate, barium aluminate, sodium ferrate, calcium silicate, and combinations thereof.

19. A method according to any of Claims 1 and 3 to 18, wherein said feed gas mixture includes carbon monoxide, said method further comprising:
providing a shift catalyst within said bed;
reacting said carbon monoxide with steam using said shift catalyst to produce additional hydrogen and carbon dioxide, said additional carbon dioxide being combined in an exothermic chemical reaction with said reactive solid to form said solid carbonate compound.

20. A method according to Claim 19, wherein said shift catalyst is selected from the group consisting of chromium/iron oxide, copper/chromium/iron, cobalt based catalysts, alumina, dolomite, limestone, marble chips and combinations thereof.

21. A method according to any of Claims 1 and 3 to 20, further comprising periodically regenerating said reactive solid, said regenerating comprising:
passing a regenerating gas, heated to a third temperature, through said bed thereby reversing said exothermic chemical reaction to produce carbon dioxide and said reactive solid in said endothermic reaction.

22. A method according to any of Claims 1 and 3 to 21, wherein said third temperature is greater than or equal to about 700°C.

23. A method or a bed according to Claim 18, wherein said reactive solid material being particles.

24. A method or a bed according to any of Claims 1 to 23, wherein said heat reservoir material comprises particles having a heat capacity and a thermal conductivity greater than or equal to the heat capacity and thermal conductivity of said reactive solid material.

25. A method or a bed according to any of Claims 1 to 24, wherein said heat reservoir material comprises particles selected from the group consisting of quartz, alumina, metallic compounds, and combinations thereof.

26. A method or a bed according to any of Claims 1 to 25, wherein said phase change material is encapsulated within a multiplicity of particles and the particles are in particular selected from the group consisting of metallic particles, alumina particles and combinations thereof.

27. A method or a bed according to Claim 26, wherein said particles are coated with said reactive solid material.
